# EUROPEAN PATENT SPECIFICATION

(11) **EP 1 117 164 B1**
(45) Date of publication and mention of the grant of the patent: **24.09.2003**
(21) Application number: 00300165.8
(22) Date of filing: 11.01.2000
(51) Int. Cl.: H02G 3/12

(54) **Accessory mounting for service provision ducting**
Zubehörmontage für Dienstbereitstellungskanal
Accessoire de montage pour un canal fournisseur de services

(43) Date of publication of application: 18.07.2001
(73) Proprietor: C & C MARSHALL LIMITED, ST. Leonards-on-Sea, East Sussex TN38 9YJ (GB)
(72) Inventor: Smith, Patrick, Bexhill-on-Sea, East Sussex (GB); Hayler, Nicholas, St.Leonards-on-Sea, East Sussex TN38 8DX (GB)
(74) Representative: Lamb, Martin John Carstairs

(56) References cited:
- EP-A- 0 475 798
- DE-A- 4 110 690
- DE-U- 9 306 468

## Description

The present invention provides an accessory mounting for use in service provision ducting and a combination of service provision ducting and an accessory mounting.

Ducting for providing for example electrical and communications services is widely used within buildings.

Such ducting typically comprises a longitudinally extending channel of indefinite length defined by a longitudinally extending floor member and a pair of longitudinally extending wall members projecting from the floor member. Various longitudinally extending mounting means are typically provided for supporting within the ducting longitudinally extending electrical conductors (commonly called busbars) or electrical or optical communication cables.

Access to electrical power or communications can be provided at any selected point along the length of the ducting by accessories such as electrical sockets, communication sockets and the like which engage with the respective conductors or cables. Such accessories typically comprise accessory mountings as part of their design, or are fixed in accessory boxes which provide a rigid support for the accessory and which can be conveniently engaged at any suitable point in the ducting. Typically, lid members are provided to provide a flush surface to the ducting between accessories.

The ducting may comprise trunking which is typically mounted on walls or floors extending in a horizontal direction, but it may be mounted extending in any suitable direction, including vertically. The ducting may also comprise free standing service provision systems, for example service or power posts and poles. When mounted vertically, there is a risk that members such as accessory mountings and lid members may slide in the longitudinal direction of the ducting which can be inconvenient or even dangerous. Accessory mountings can also sometimes be pulled out of the service provision ducting accidentally.

It has been proposed in the past to provide means for resisting such movement in the longitudinal direction of the ducting by providing accessory mountings with a gripping means in the base to engage with upstanding members located at the bottom of the ducting. Systems of this type are described for example in DE 3113679, DE 3829327, DE 4332702 and DE 4331580. There can be a problem with such means for fixing to upstanding members at the bottom of the ducting if such outstanding members are of differing configurations or if they are already engaged for example with busbars or other mounting means.

GB 2232539 and EP-A-0473589 disclose ducting assemblies having longitudinally extending channels with a longitudinal opening defined by in turned edges of side walls. An accessory mounting is provided which, in each case, comprises two parts. The in turned edges of the side walls of the trunking can be gripped between the two parts of the accessory mounting to prevent lateral movement within the trunking. Both designs have the disadvantage that the trunking and the accessory boxes have to be specially designed to fit one another.

DE-A-4110690 provides an accessory mounting for use in surface provision ducting, which accessory mounting is securable against lateral movement in the surface provision ducting.

The present invention sets out to provide means for resisting movement of an accessory mountings in the longitudinal direction of service provision ducting, and to resist pull-out, which can be used with existing designs of ducting. It is also desired that the accessory box should be simple, easy to use and should not interfere with other apparatus mounted in the ducting.

Accordingly, the present invention provides an accessory mounting, the accessory mounting being for use in service provision ducting of the sort comprising a longitudinally extending channel of indefinite length defined by a longitudinally extending floor member and at least two longitudinally extending wall members projecting from the floor member and having abutment surfaces facing away from the channel, a projection being defined on at least one of the wall members, the projection projecting into the channel, the accessory mounting being locatable in the channel and comprising a base part, side parts and means for engaging the abutment surfaces of at least one of the wall members, detent means being provided at the side part of the accessory mounting which, in use, faces the wall member having the projection, the detent means being moveably mounted with respect to the side part and configured to engage with the projection, means being provided to variably urge the detent means towards the protection to provide grip between the accessory mounting and the channel. characterized in that the detent means, in use, forms a snap fit over the projection, being subsequently urged into engagement with the projection.

The present invention further provides a combination of service provision ducting and an accessory mounting, the ducting comprising a longitudinally extending channel of indefinite length defined by a longitudinally extending floor member and a pair of longitudinally extending wall members projecting from the floor member, the wall members having abutment surfaces facing away from the channel, a projection being defined on at least one of the wall members, the projection projecting into the channel, the accessory mounting being located in the channel and comprising side parts, a base part and means engaging the abutment surface of at least one of the wall members, detent means being provided at the side part of the accessory mounting facing the wall member having the projection, the detent means being movable with respect to the said side part and engaged with the projection, means being provided to variably urge the detent means towards the projection to provide grip between the accessory mounting and the channel, characterized in that the detent means, in use, forms a snap fit over the projection, being subsequently urged into engagement with the projection.

The grip thus provided can be used to resist lateral movement of the accessory mounting, or pull-out.

The inventors have realised that many types of ducting currently in use comprise features that can be used to fix an accessory box against movement. Firstly, such ducting typically comprises wall members having abutment surfaces which face out of or away from the channel. Co-operating surfaces are provided on accessory boxes so that movement of the accessory box into the ducting can be limited in a simple manner which makes the accessory box easy to insert.

Secondly, many types of ducting comprise projections on the wall members, which projections project into the channel. Typically, such projections are provided for engagement with lid members or with the accessory mounting itself, to resist vertical removal of such members from the ducting. The present inventors have realised that such projections provide a suitable surface for gripping to prevent movement of the accessory mounting. Better resistance to pull-out can be provided by the tightenable grip provided by the invention.

The ducting may be of any suitable type. It is suitably made of cast, moulded or extruded material, for example thermoplastic or metal, particularly uPVC or aluminium. Suitably, the ducting comprises other members projecting from the floor member for engaging with cables, conductors, busbars, optical fibres etc. The ducting may comprise means defining additional longitudinally extending channels. Suitably, it comprises lid means for closing the channel. Suitable ducting is described for example in GB-A-2253096 and GB-A-2282278.

The abutment surfaces facing away from the channel may be any suitable abutment surfaces. For example, they may simply comprise the outward edges of the wall members. Alternatively, they may comprise longitudinally extending surfaces extending away from the wall members, preferably substantially perpendicularly. They may extend into or out of the channel. Preferably, the abutment surfaces extend into the channel and are a part of the same formation as the projection.

The projection may be of any suitable shape so long as it extends away from the wall member towards the channel, thereby providing an undercut projection under which the detent means may engage. Suitably the projection extends longitudinally in the direction of the ducting. Preferably, both of the wall members comprise a projection projecting into the channel.

The accessory mounting may comprise part of an accessory such as an electrical socket or it may comprise an accessory box into which an accessory may be mounted.

The accessory mounting is suitably formed of pressed or moulded material, such as thermoplastic or metal, particularly preferably uPVC or aluminium. A suitable accessory box is described in GB-A-2258768. The accessory mounting will have side parts and a base. The base part is required by law, in order to protect people working on the accessory box when it is in place from live electrical conductors. The side parts and/or floor part may be pierced to allow cables to enter the accessory mounting or to allow means such as contacts to project from the accessory mounting to engage with, for example, busbars.

The means for engaging the abutment surfaces of at least one of the wall members may comprise any suitable formation. Preferably, it comprises a projection projecting outwardly from side walls of the accessory mounting which will face the wall members of the trunking in use. Preferably, means for engaging abutment surfaces of both wall members are provided. The means for engaging the abutment surfaces may simply comprise surfaces for resting against the abutment surfaces. However, where the abutment surfaces comprise projections projecting into the channel, the engaging means may comprise co-operating grip parts for gripping opposed sides of the projection. It should be noted that the grip provided by such gripping means is normally dependent upon the resilience of the material from which the accessory mounting is made. Such gripping is not normally sufficient to prevent movement under all conditions, which is why specially adapted means for resisting movement are provided according to the present invention. The means for engaging the abutment surfaces may be provided at any suitable position on the accessory mounting. However, they are preferably provided at the part of the accessory mounting which, when in position, will be located nearest the open face of the channel.

Typically, the accessory mounting will comprise a cover plate releasably fixable to the accessory mounting to close the accessory mounting and to provide a smooth, safe finish. The accessory mounting will be of any suitable shape. It is, however, required that there be detent means at that side part which is to be located in use facing the wall member having the projection. Where the channel of the ducting is substantially symmetrical, with both wall members being of substantially the same height and each having a substantially similar projection projecting into the channel, the accessory mounting may be made so that it can be engaged with either of the respective side parts facing either of the wall members. This is preferred, as it is easier to assemble.

The detent means may be of any suitable design. Preferably, it is mounted on the respective side part. However, it may be mounted in the body of the accessory mounting and configured to project through an opening in the respective side part or it may be mounted on the bottom of the accessory mounting and configured to extend upward and along the respective side part. It is however required that it is located at the respective side part, and is movable with respect to it.

The detent means may comprise tongue parts, as will be described below.

The accessory mounting may be deeper than the channel, with the detent means being provided at a suitable position on the respective side part. Preferably, however the accessory mounting is of depth smaller than the channel and designed so that it can be contained substantially wholly within the channel. Preferably, the projection is located on or substantially at the end of the wall member furthest from the floor member of the ducting. The detent means should then be located near the top of the accessory mounting.

In a preferred embodiment, the detent means is resiliently mounted and is provided with a cam surface which allows the accessory mounting to be inserted into the channel past the projection, with the projection sliding along the cam surface and resiliently flexing the detent means, the detent means snap fitting into a position in which it is engaged with the projection when the cam surface has passed the projection.

Removal of the accessory mounting can be obtained simply by reversing the movements necessary to engage the detent means with the projection. For example, means may be provided to disengage the detent means by use of a tool such as a screwdriver, or by simple manipulation.

For example, the detent means may comprise tongue members. As noted above, these may be capable of elastic deformation to provide strong grip.

Preferably, detent means are provided on each of the side parts which face the wall members in use, to make insertion of the accessory mounting simpler.

Grip may be provided between the accessory mounting and the ducting by any suitable means. The grip providing means must be variable. That is, the strength of grip that it provides must be variable, to allow both tightening and release. This is in contrast to resilient gripping means which have sometimes been used in the past. Such resilient gripping means must provide a balance of firmness of grip with releasability. The present invention sets out to provide grip between the accessory mounting and the ducting which can be as strong as necessary and accordingly employs means to variably urge the detent means towards the projection.

The accessory mounting may comprise an additional extension which, in use, rests on top of the projection from the wall member, the detent means being arranged so that it can be urged towards the projection to grip the projection between the detent means and the extension. Alternatively, grip may be provided between the detent means gripping the underside of the projection and the means for engaging the abutment surfaces of the wall members.

Any of the surfaces on the projection, detent means or additional extension of the accessory mounting which, in use, are engaged to provide grip, may be provided with a frictional surface finish, to enhance grip. The frictional surface finish may comprise stippling, tooling, roughening or any other suitable finish.

In a further alternative, the means for urging the detent means towards the projection may thereby also urge the accessory mounting towards the floor of the ducting whereby grip is provided between the accessory mounting, the projection and the floor of the trunking.

The urging means may be of any suitable design. Preferably, however, it comprises a screw thread and bushing whereby rotation of the screw thread causes relative longitudinal movement between the screw thread and the bushing. The screw thread may be mounted on the accessory mounting or on the detent means. A screw thread has the particular advantage that rotation in the opposite direction allows disengagement of the grip and subsequent removal of the accessory mounting or repositioning of the accessory mounting.

The accessory mounting may be part of or configured to accommodate a single accessory, or more than one accessory. Snap-fit internal dividers may be provided to subdivide the internal space of a multi-accessory mounting. The accessory mounting may be configured so that a plurality of accessory mountings can be stacked next to one another and fixed together.

Knock-out portions may be provided, in a manner known in the art, to allow cables to enter the box. Cable retainers may be located in the apertures obtained when the knockout portions are knocked-out, to prevent removal of the cables from the box.

More than one detent means may be provided on the accessory mounting. The detent means may be configured to extend longitudinally. Alternatively, a plurality of detent means may be provided spaced apart in the longitudinal direction of the accessory mounting.

The present invention will be further described by way of example with reference to the accompanying drawings, in which:

### Brief Description of the Drawings

Figure 1 is a perspective view, partially cut away, of an accessory mounting in the form of a two gang accessory box according to the invention.
Figure 2 is a view of the detent means of Figure 1.

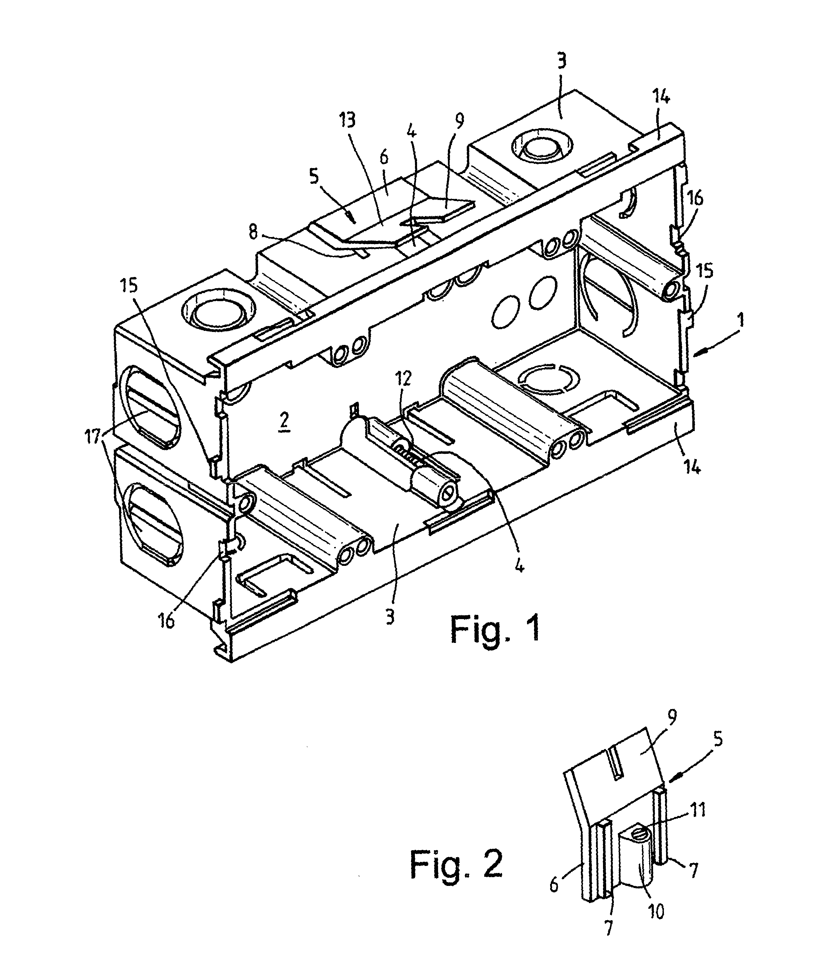

Figure 1 shows an accessory mounting in the form of an accessory box (1) according to the invention. It is a two-gang accessory box, that is, one that is of size sufficient to accommodate two accessories. The accessory box (1) of Figure 1 comprises a base part (2) and side parts (3) which in use face upstanding wall members of service provision ducting(not shown). Each side part (3) includes an opening(4). A detent means (5) projects from the inside of the accessory box (1) through each opening (4). The detent means (5) (see Figure 2) comprises a plate (6), the height of the plate (6) being smaller than the height of the opening (4). On each plate (6) there are mounted runners (7) which allow the plate to move smoothly up and down the slots in surface (8) of the accessory box. The plate (6) comprises resilient tongue members (9). The plate further comprises a bushing (10) with a threaded bore (11) in which a screw (12) engages. It can be seen that rotation of the screw (12) in the threaded bushing (10) will cause displacement of the plate (6) towards or away from the screw (12).

In use, the accessory box (1) is inserted into ducting. The accessory box may be inserted into the ducting by simply pushing the accessory box (1) so that cam surfaces (13) of the resilient tongues (9) slide over the projections and, when in position, the resilient tongues (9) snap fit into engagement underneath the projections. The screw (12) can then be rotated to draw the ends of resilient tongues (9) into engagement with the projections. The projections are thereby gripped against flanges (14) (provided to abut outwardly facing surfaces of the ducting (not shown)) of the accessory box, thereby providing frictional resistance against movement of the accessory box (1) in the longitudinal direction of the ducting.

A snap-fit divider may be provided for dividing the space within the accessory box (1) into two, to separate two accessories held within the accessory box. Co-operating tongue (15) and recess (16) means are provided in the longitudinal ends of the accessory box, whereby a plurality of accessory boxes according to Figure 1 may be placed abutting one another in a longitudinally extending line, secured with respect to one another by engagement be respective tongues (15) and recesses (16).

Knock-out portions (17) are provided in access holes. Cable retainers (not shown) can be inserted into the holes, in a manner known in the art, to resist movement of cables when in position extending into the accessory box.

The present invention has been described above by way of example only and modifications can be made within the invention as defined by the claims.

## Claims

1. An accessory mounting, the accessory mounting being for use in service provision ducting of the sort comprising a longitudinally extending channel of indefinite length defined by a longitudinally extending floor member and at least two longitudinally extending wall members projecting from the floor member and having abutment surfaces facing away from the channel, a projection being defined on at least one of the wall members, the projection projecting into the channel,
the accessory mounting being locatable in the channel and comprising a base part (2), side parts (3) and means (14) for engaging the abutment surfaces of at least one of the wall members,
detent means (5) being provided at the side part (3) of the accessory mounting which, in use, faces the wall member having the projection, the detent means (5) being moveably mounted with respect to the side part (3) and configured to engage with the projection, means (10,11,12) being provided to variably urge the detent means (5) towards the projection to provide grip between the accessory mounting and the channel **characterized in that** the detent means (5), in use, forms a snap fit over the projection, being subsequently urged into engagement with the projection.

2. An accessory mounting according to claim 1, comprising an extension (14), which, in use, rests on top of the projection, the detent means (5) being arranged so that it can be urged towards the projection to grip the projection between the detent means (5) and the extension (14).

3. An accessory mounting according to any preceding claim, wherein the urging means comprising a screw thread (12) engaged with a bushing (10).

4. An accessory mounting according to any of claims 1-3, wherein the means (10,11,12) for urging the detent means (5) towards the projection (14) thereby also urges the accessory mounting towards the floor of the ducting, whereby grip is provided between the accessory mounting, the projection and the floor of the ducting.

5. A combination of service provision ducting and an accessory mounting,
the ducting comprising a longitudinally extending channel of indefinite length defined by a longitudinally extending floor member and a pair of longitudinally extending wall members projecting from the floor member, the wall members having abutment surfaces facing away from the channel, a projection being defined on at least one of the wall members, the projection projecting into the channel,
the accessory mounting being located in the channel and comprising side parts (3), a base part (2) and means (14) engaging the abutment surface of at least one of the wall members, detent means (15) being provided at the side part (3) of the accessory mounting facing the wall member having the projection, the detent means (5) being movable with respect to the said side part (3) and engaged with the projection, means (10,11,12) being provided to variably urge the detent means (5) towards the projection to provide grip between the accessory mounting and the channel **characterized in that** the detent means (5), in use, forms a snap fit over the projection, being subsequently urged into engagement with the projection.

6. The combination of claim 5, wherein both of the wall members comprise a projection projecting into the channel.

## Patentansprüche

1. Zubehörhalterung, wobei die Zubehörhalterung für eine Verwendung bei einem Versorgungseinrichtungskanalsystem der Ausführung gedacht ist, das einen sich in Längsrichtung erstreckenden Kanal von unbegrenzter Länge aufweist, der durch ein sich in Längsrichtung erstreckendes Bodenelement und mindestens zwei sich in Längsrichtung erstreckende Wandelemente definiert wird, die aus dem Bodenelement vorstehen und Stoßflächen aufweisen, die vom Kanal weg liegen, wobei ein Vorsprung auf mindestens einem der Wandelemente definiert wird, wobei der Vorsprung in den Kanal hineinragt,
wobei die Zubehörhalterung im Kanal angeordnet werden kann und aufweist: ein Basisteil (2); Seitenteile (3); und eine Einrichtung (14) für einen Eingriff der Stoßflächen von mindestens einem der Wandelemente,
wobei eine Arretiereinrichtung (5) am Seitenteil (3) der Zubehörhalterung bereitgestellt wird, die bei Benutzung zum Wandelement mit dem Vorsprung hin liegt, wobei die Arretiereinrichtung (5) mit Bezugnahme auf das Seitenteil (3) beweglich montiert und so gestaltet ist, daß sie mit dem Vorsprung in Eingriff kommt, wobei eine Einrichtung (10, 11, 12) bereitgestellt wird, um die Arretiereinrichtung (5) in Richtung des Vorsprunges regelbar zu treiben, um einen Halt zwischen der Zubehörhalterung und dem Kanal zu bewirken, **dadurch gekennzeichnet, daß** die Arretiereinrichtung (5) bei Benutzung einen Schnappverschluß über dem Vorsprung bildet, der nachfolgend in Eingriff mit dem Vorsprung getrieben wird.

2. Zubehörhalterung nach Anspruch 1, die eine Verlängerung (14) aufweist, die bei Benutzung oben auf dem Vorsprung aufliegt, wobei die Arretiereinrichtung (5) so angeordnet wird, daß sie in Richtung des Vorsprunges getrieben werden kann, um den Vorsprung zwischen der Arretiereinrichtung (5) und der Verlängerung (14) zu erfassen.

3. Zubehörhalterung nach vorhergehenden Ansprüchen, bei der die Einrichtung für das Treiben ein Schraubengewinde (12) aufweist, das mit einer Buchse (10) in Eingriff kommt.

4. Zubehörhalterung nach einem der Ansprüche 1 bis 3, bei der die Einrichtung (10, 11, 12) für das Treiben der Arretiereinrichtung (5) in Richtung des Vorsprunges (14) dadurch ebenfalls die Zubehörhalterung in Richtung des Bodens des Kanalsystems treibt, wodurch ein Halt zwischen der Zubehörhalterung, dem Vorsprung und dem Boden des Kanalsystems bewirkt wird.

5. Kombination des Versorgungseinrichtungskanalsystems und einer Zubehörhalterung,
wobei das Kanalsystem aufweist: einen sich in Längsrichtung erstreckenden Kanal von unbegrenzter Länge, der durch ein sich in Längsrichtung erstreckendes Bodenelement und ein Paar sich in Längsrichtung erstreckende Wandelemente, die aus dem Bodenelement vorstehen, definiert wird, wobei die Wandelemente Stoßflächen aufweisen, die vom Kanal weg liegen, wobei ein Vorsprung auf mindestens einem der Wandelemente definiert wird, wobei der Vorsprung in den Kanal hineinragt,
wobei die Zubehörhalterung im Kanal angeordnet wird und aufweist: Seitenteile (3); ein Basisteil (2) und eine Einrichtung (14) für einen Eingriff der Stoßflächen von mindestens einem der Wandelemente, wobei eine Arretiereinrichtung (15) am Seitenteil (3) der Zubehörhalterung bereitgestellt wird, die zum Wandelement mit dem Vorsprung hin liegt, wobei die Arretiereinrichtung (5) mit Bezugnahme auf das Seitenteil (3) beweglich ist und mit dem Vorsprung in Eingriff kommt, wobei eine Einrichtung (10, 11, 12) bereitgestellt wird, um die Arretiereinrichtung (5) in Richtung des Vorsprunges regelbar zu treiben, um einen Halt zwischen der Zubehörhalterung und dem Kanal zu bewirken, **dadurch gekennzeichnet, daß** die Arretiereinrichtung (5) bei Benutzung einen Schnappverschluß über dem Vorsprung bildet, der nachfolgend in Eingriff mit dem Vorsprung getrieben wird.

6. Kombination nach Anspruch 5, bei der beide Wandelemente einen Vorsprung aufweisen, der in den Kanal hinragt.

## Revendications

1. Accessoire de montage, l'accessoire de montage étant destiné à être utilisé dans une conduite de prestation de services du type comprenant un canal à extension longitudinale d'une longueur indéfinie défini par un élément de plancher à extension longitudinale et au moins deux éléments de paroi à extension longitudinale débordant de l'élément de plancher et comportant des surfaces de butée orientées à l'écart du canal, une saillie étant définie sur au moins un des éléments de paroi, la saillie débordant dans le canal,
l'accessoire de montage pouvant être agencé dans le canal et comprenant une partie de base (2), des parties latérales (3) et un moyen (14) destiné à s'engager dans les surfaces de butée d'au moins un des éléments de paroi,
un moyen de cliquet (5) étant agencé au niveau de la partie latérale (3) de l'accessoire de montage, faisant face en service à l'élément de paroi comportant la saillie, le moyen de cliquet (5) étant monté de manière à pouvoir se déplacer par rapport à la partie latérale (3) et étant configuré de sorte à s'engager dans la saillie, un moyen (10, 11, 12) servant à exercer une poussée variable sur le moyen de cliquet (5) pour le pousser vers la saillie afin d'établir la tenue entre l'accessoire de montage et le canal, **caractérisé en ce que** le moyen de cliquet (5) est agencé en service par encliquetage au-dessus de la saillie avant d'être engagé par poussée dans la saillie.

2. Accessoire de montage selon la revendication 1, comprenant une extension (14), reposant en service sur la partie supérieure de la saillie, le moyen de cliquet (5) étant agencé de sorte à pouvoir être poussé vers la saillie pour saisir la saillie entre le moyen de cliquet (5) et l'extension (14).

3. Accessoire de montage selon l'une quelconque des revendications précédentes, dans lequel le moyen poussoir comprend un filet de vis (12) engagé dans une douille (10).

4. Accessoire de montage selon l'une quelconque des revendications 1 à 3, dans lequel le moyen (10, 11, 12) servant à pousser le moyen de cliquet (5) vers la saillie (14) pousse aussi l'accessoire de montage vers le plancher de la conduite, la tenue étant ainsi établie entre l'accessoire de montage, la saillie et le plancher de la conduite.

5. Combinaison d'une conduite de prestation de services et d'un accessoire de montage, la conduite comprenant un canal à extension longitudinale de longueur indéfinie, défini par un élément de plancher à extension longitudinale et une paire d'éléments de paroi à extension longitudinale débordant de l'élément de plancher, les éléments de paroi comportant des surfaces de butée orientées à l'écart du canal, une saillie étant définie sur au moins un des éléments de paroi, la saillie débordant dans le canal,
l'accessoire de montage étant agencé dans le canal et comprenant des parties latérales (3), une partie de base (2) et un moyen (14) s'engageant dans la surface de butée d'au moins un des éléments de paroi, un moyen de cliquet (15) étant agencé au niveau de la partie latérale (3) de l'accessoire de montage faisant face à l'élément de paroi comportant la saillie, le moyen de cliquet (5) pouvant être déplacé par rapport à ladite partie latérale (3) et engagé dans la saillie, un moyen (10, 11, 12) servant à exercer une poussée variable sur le moyen de cliquet (5) pour le pousser vers la saillie afin d'établir la tenue entre l'accessoire de montage et le canal, **caractérisé en ce que** le moyen de cliquet (5) est agencé en service pat encliquetage au-dessus de la saillie avant d'être engagé par poussée dans la saillie.

6. Combinaison selon la revendication 5, dans laquelle les deux éléments de paroi comprennent une saillie débordant dans le canal.
